# EUROPEAN PATENT APPLICATION

(11) **EP 4 794 210 A1**
(43) Date of publication of application: **19.08.2026**
(21) Application number: 24896125.2
(22) Date of filing: 28.10.2024
(51) Int. Cl.: H04B 3/54

(54) **COMMUNICATION METHOD AND APPARATUS**

(30) Priority: 29.11.2023 CN 202311626393
(71) Applicant: HUAWEI TECHNOLOGIES CO., LTD., Shenzhen 518129 (CN)
(72) Inventor: XU, Lifa, Shenzhen, Guangdong 518129 (CN); LIU, Guoen, Shenzhen, Guangdong 518129 (CN); YANG, Yanyue, Shenzhen, Guangdong 518129 (CN)
(74) Representative: Gill Jennings & Every LLP
(86) International application number: PCT/CN2024/127870
(87) International publication number: WO 2025/113034

(57) **Abstract**

A communication method and apparatus are provided, and relate to the field of communication technologies, to increase a throughput of a communication system, thereby improving communication performance. The method includes: A second device obtains first information; and sends the first information, where the first information includes first indication information, second indication information, and a plurality of user information fields corresponding to a plurality of first devices, the first indication information indicates a number of users, and the second indication information indicates a number of symbols of a training sequence.

## Description

This application claims priority to Chinese Patent Application No. 202311626393.2, filed with the China National Intellectual Property Administration on November 29, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a power line communication (power line communication, PLC) system, a central coordinator (central coordinator, CCO) may perform point-to-point communication with a station. For example, the central coordinator may send, to the station, a physical layer protocol data unit (physical protocol data unit, PPDU) carrying payload data (payload data).

The PPDU may include a preamble (preamble) symbol, a frame control (frame control, FC) field, and a payload data field. Because sizes (sizes) of the preamble symbol and the FC field are fixed, when an amount of the payload data in the PPDU is small, a proportion of the payload data decreases, and correspondingly proportions of the preamble symbol and the FC field increase. This causes a decrease in a throughput of a communication system and reduces communication performance.

### SUMMARY

Embodiments of this application provide a communication method and apparatus, to increase a throughput of a communication system, thereby improving communication performance.

According to a first aspect, a communication method is provided. The method may be performed by a second device. Unless otherwise specified, the "second device" in this application may be the second device, or may be a component (for example, a processor, a chip, or a chip system) in the second device, or may be a logic module or software that can implement all or some functions of the second device. The method includes: The second device obtains first information; and sends the first information, where the first information includes first indication information, second indication information, and a plurality of user information fields corresponding to a plurality of first devices, the first indication information indicates a number of users, and the second indication information indicates a number of symbols of a training sequence.

Based on the first aspect, the second device may simultaneously communicate with the plurality of first devices based on the first information. In addition, the second device may include, in the first information, payload data associated with the plurality of first devices, so that a proportion of the payload data in the first information can increase, a throughput of a communication system can be improved, and communication performance can be improved.

According to a second aspect, a communication method is provided. The method may be performed by a first device. Unless otherwise specified, the "first device" in this application may be the first device, or may be a component (for example, a processor, a chip, or a chip system) in the first device, or may be a logic module or software that can implement all or some functions of the first device. The method includes: The first device obtains first information; and parses the first information, where the first information includes first indication information, second indication information, and a plurality of user information fields corresponding to a plurality of first devices, the first indication information indicates a number of users, and the second indication information indicates a number of symbols of a training sequence.

Based on the second aspect, the first device may communicate with a second device based on the first information without contending for a communication channel, so that communication effectiveness can be improved. In addition, the second device may include, in the first information, payload data associated with the plurality of first devices, so that a proportion of the payload data can increase, a throughput of a communication system can be improved, and communication performance can be improved.

In a possible implementation, an uplink frame is sent to the second device based on the first information.

Based on this possible implementation, the plurality of first devices may simultaneously send uplink frames to the second device on different resource units based on the first information, so that the proportion of the payload data can increase, the throughput of the communication system can be improved, and the communication performance can be improved.

In a possible implementation, the uplink frame includes a first training sequence, and the first training sequence is determined based on the second indication information and an index of a resource unit associated with the first device.

Based on this possible implementation, the second device may perform channel estimation on an uplink channel based on the first training sequence, to determine a channel feature of the uplink channel, and may parse payload data in the uplink frame based on the channel feature, so that communication reliability can be improved.

With reference to the first aspect and the second aspect, in a possible implementation, a first frame control field includes the first indication information.

Based on this possible implementation, a feasible solution is provided for implementing the first indication information.

With reference to the first aspect and the second aspect, in a possible implementation, the first information further includes third indication information, the third indication information indicates whether at least one index, of the resource unit associated with the first device, that is greater than a first value exists, and the first value is a positive integer.

Based on this possible implementation, when the third indication information indicates that the at least one index, of the resource unit (resource unit, RU) associated with the first device, that is greater than the first value exist, it may be determined that the index of the resource unit is greater than the first value, so that a number of bits occupied by a resource unit field can be large, and it can be ensured as much as possible that the resource unit field can indicate indexes of all resource units. When the third indication information indicates that the at least one index, of the resource unit associated with the first device, that is greater than the first value does not exist, it may be determined that the index of the resource unit is less than or equal to the first value, so that a number of bits occupied by a resource unit field can be small, and transmission overheads can be reduced.

With reference to the first aspect and the second aspect, in a possible implementation, a first control frame includes the third indication information.

Based on this possible implementation, a feasible solution is provided for implementing the third indication information.

With reference to the first aspect and the second aspect, in a possible implementation, when the number of users is equal to 4, the first information further includes a physical block (physical block, PB) field, and different first devices occupy a same number of physical blocks; or when the number of users is less than 4, each of the plurality of user information fields includes a physical block field, where the physical block field indicates a number of physical blocks occupied by each first device.

Based on this possible implementation, a position of the physical block field may be determined based on the number of users, to provide a feasible solution for determining the position of the physical block field. When the first information includes the physical block field, different first devices occupy a same number of physical blocks, so that a number of bits occupied by the physical block field can be reduced, and transmission overheads can be reduced. When each user information field includes the physical block field, numbers of physical blocks occupied by different first devices may be the same or may be different, so that the number of physical blocks occupied by each first device may be determined based on an actual communication status of each first device, and flexibility of determining the number of physical blocks occupied by each first device can be improved.

With reference to the first aspect and the second aspect, in a possible implementation, a number of bits occupied by the physical block field is determined based on the first indication information; or a number of bits occupied by the physical block field is determined based on the first indication information and third indication information, the third indication information indicates whether the at least one index, of the resource unit associated with the first device, that is greater than the first value exists, and the first value is the positive integer.

Based on this possible implementation, the number of bits occupied by the physical block field may be determined in the foregoing two methods. In addition, a number of bits occupied by a physical block is determined in the foregoing methods, so that when there is a large number of users, it can be ensured as much as possible that a number of bits occupied by the first information is limited within a specific range, and transmission overheads can be reduced.

With reference to the first aspect and the second aspect, in a possible implementation, when the number of users indicated by the first indication information is less than 4, the number of bits occupied by the physical block field is 4; or when the number of users indicated by the first indication information is equal to 4, and the third indication information indicates that the at least one index, of the resource unit associated with the first device, that is greater than the first value does not exist, the number of bits occupied by the physical block field is 4; or when the number of users indicated by the first indication information is equal to 4, and the third indication information indicates that the at least one index, of the resource unit associated with the first device, that is greater than the first value exists, the number of bits occupied by the physical block field is 2.

Based on this possible implementation, the number of bits occupied by the physical block may be explicitly determined in the foregoing three methods, to provide three feasible solutions for determining the number of bits occupied by the physical block field.

With reference to the first aspect and the second aspect, in a possible implementation, each of the plurality of user information fields includes a power control (power control, PC) field, and the power control field indicates a transmit power of the first device.

Based on this possible implementation, the transmit power of the first device may be attenuated based on the power control field, to avoid an excessively large difference between power spectral densities (power spectral densities, PSD) of signals from different first devices to the second device. This can avoid, as much as possible, interference caused when different first devices communicate with the second device due to an excessively high transmit power, and can also avoid, as much as possible, poor communication quality caused by an excessively low transmit power, so that communication reliability can be improved.

With reference to the first aspect and the second aspect, in a possible implementation, each of the plurality of user information fields further includes a resource unit field, and the resource unit field indicates the index of the resource unit associated with the first device.

Based on this possible implementation, the first device may determine, based on the resource unit field, the index of the resource unit associated with the first device. Because different first devices are associated with different resource units, the second device may simultaneously communicate with the plurality of first devices on different resource units. That is, the second device may include, in the first information, the payload data associated with the plurality of first devices, so that the proportion of the payload data can increase, the throughput of the communication system can be improved, and the communication performance can be improved.

With reference to the first aspect and the second aspect, in a possible implementation, a number of bits occupied by the resource unit field is determined based on the third indication information, the third indication information indicates whether the at least one index, of the resource unit associated with the first device, that is greater than the first value exists, and the first value is the positive integer.

Based on this possible implementation, the number of bits occupied by the resource unit field may be determined based on the third indication information, so that it can be ensured as much as possible that the resource unit field indicates an index of a resource unit associated with each first device, to provide a feasible solution for determining the number of bits occupied by the resource unit field.

With reference to the first aspect and the second aspect, in a possible implementation, when the third indication information indicates that the at least one index, of the resource unit associated with the first device, that is greater than the first value does not exist, the number of bits occupied by the resource unit field is 4; or when the third indication information indicates that the at least one index, of the resource unit associated with the first device, that is greater than the first value exists, the number of bits occupied by the resource unit field is 5.

Based on this possible implementation, the number of bits occupied by the resource unit field may be explicitly determined based on the third indication information, to provide a feasible solution for determining the number of bits occupied by the resource unit field.

With reference to the first aspect and the second aspect, in a possible implementation, each of the plurality of user information fields further includes a copy (copy) field, the copy field indicates a number of copy times, and the number of copy times indicates a number of repetitions of payload data.

Based on this possible implementation, a number of times of simultaneously transmitting the payload data may be determined based on the copy field, so that a bit error rate of the payload data can be reduced, and communication reliability can be improved.

With reference to the first aspect and the second aspect, in a possible implementation, a number of bits occupied by the copy field is determined based on the first indication information.

Based on this possible implementation, the number of bits occupied by the copy field may be determined based on the first indication information, so that the number of bits occupied by the first information can be limited within the specific range as much as possible, and transmission overheads can be reduced.

With reference to the first aspect and the second aspect, in a possible implementation, when the number of users indicated by the first indication information is less than 4, the number of bits occupied by the copy field is 2; or when the number of users indicated by the first indication information is equal to 4, the number of bits occupied by the copy field is 1.

Based on this possible implementation, the number of bits occupied by the copy field may be explicitly determined based on the first indication information, to provide a feasible solution for determining the number of bits occupied by the copy field.

With reference to the first aspect and the second aspect, in a possible implementation, the first information is a trigger frame.

Based on this possible implementation, the first information may be the trigger frame, to provide a feasible solution for implementing the first information.

With reference to the first aspect and the second aspect, in a possible implementation, the user information field of the first device includes a physical block field, and the physical block field indicates a number of physical blocks occupied by the first device.

Based on this possible implementation, the number of physical blocks occupied by the first device may be determined based on the physical block field, to provide a feasible solution for determining the number of physical blocks occupied by the first device.

With reference to the first aspect and the second aspect, in a possible implementation, a number of bits occupied by the physical block field is determined based on the first indication information.

Based on this possible implementation, the number of bits occupied by the physical block field may be determined based on the first indication information. When there are a large number of users, a number of bits occupied by a physical block field in each user information field may be reduced, so that a number of bits occupied by each user information field can be limited within a specific range, and transmission overheads can be reduced.

With reference to the first aspect and the second aspect, in a possible implementation, when the number of users indicated by the first indication information is less than 4, the number of bits occupied by the physical block field is 4; or when the number of users indicated by the first indication information is equal to 4, the number of bits occupied by the physical block field is 1.

Based on this possible implementation, the number of bits occupied by the physical block field may be explicitly determined in the foregoing methods, to provide a feasible solution for determining the number of bits occupied by the physical block field.

With reference to the first aspect and the second aspect, in a possible implementation, each of the plurality of user information fields further includes one or both of the following: a copy field or a resource unit field; and the copy field indicates a number of copy times, the number of copy times indicates a number of repetitions of payload data, and the resource unit field indicates an index of a resource unit associated with the first device.

Based on this possible implementation, a number of times of simultaneously transmitting the payload data may be determined based on the copy field, so that a bit error rate of the payload data can be reduced, and communication reliability can be improved. In addition, the first device may determine, based on the resource unit field, the index of the resource unit associated with the first device. Because different first devices are associated with different resource units, the second device may simultaneously communicate with the plurality of first devices on different resource units. That is, the second device may include, in the first information, the payload data associated with the plurality of first devices, so that the proportion of the payload data can increase, the throughput of the communication system can be improved, and the communication performance can be improved.

With reference to the first aspect and the second aspect, in a possible implementation, the first information further includes a second training sequence, and the second training sequence is determined based on the second indication information.

Based on this possible implementation, the first device may perform channel estimation on a downlink channel based on the second training sequence, to determine a channel feature of the downlink channel, and may parse the payload data based on the channel feature, so that communication reliability can be improved.

With reference to the first aspect and the second aspect, in a possible implementation, the first information is a downlink frame.

Based on this possible implementation, the first information may be the downlink frame, to provide a feasible solution for implementing the first information.

With reference to the first aspect and the second aspect, in a possible implementation, the user information field of the first device further includes one or both of the following: an identification information field or a first field; and the identification information field indicates identification information of the first device, and the first field indicates one or more of the following: a modulation and coding scheme (modulation and coding scheme, MCS), a code rate, or a size of a physical block.

Based on this possible implementation, the identification information of the first device may be determined based on the identification information field, and the user information field associated with the first device may be determined. In addition, a position of the payload data may be determined based on the size of the physical block in the first field, and the payload data is parsed based on the modulation and coding scheme and the code rate in the first field, so that communication effectiveness can be improved.

With reference to the first aspect and the second aspect, in a possible implementation, the number of copy times is determined based on channel quality.

Based on this possible implementation, when the channel quality is good, the payload data may be transmitted based on a small number of copy times, so that transmission overheads can be reduced; or when the channel quality is poor, the payload data may be transmitted based on a large number of copy times, so that communication reliability can be improved.

With reference to the first aspect and the second aspect, in a possible implementation, when the number of users is X, a number of second frame control fields is $\left⌈X/4\right⌉$, the second frame control field is a newly added frame control field, $\left⌈⋅\right⌉$ is obtained by performing a ceiling operation, and X is a positive integer.

Based on this possible implementation, the number of second control fields may be determined based on the number of users, so that the second device can simultaneously communicate with more first devices, the payload data can be increased, the throughput of the communication system can be improved, and the communication performance can be improved.

According to a third aspect, a communication apparatus is provided, configured to implement the method in the first aspect. The communication apparatus may be the second device in the first aspect, or an apparatus or a component, for example, a chip, included in the second device.

The communication apparatus includes a corresponding module, unit, or means (means) for implementing the foregoing method. The module, unit, or means may be implemented by hardware, software, or hardware executing corresponding software. The hardware or the software includes a plurality of modules or units corresponding to the foregoing functions.

In some possible implementations, the communication apparatus may include a processing module and a transceiver module. The transceiver module may include a sending module and a receiving module, respectively configured to implement a sending function and a receiving function in any one of the first aspect and the possible implementations of the first aspect. The processing module may be configured to implement a processing function in any one of the first aspect and the possible implementations of the first aspect. For example, the processing module is configured to obtain first information, where the first information includes first indication information, second indication information, and a plurality of user information fields corresponding to a plurality of first devices, the first indication information indicates a number of users, and the second indication information indicates a number of symbols of a training sequence; and the transceiver module is configured to send the first information.

Optionally, the transceiver module and the processing module of the communication apparatus in the third aspect may further perform corresponding functions in any one of the first aspect or the possible implementations of the first aspect. For details, refer to the detailed descriptions in the method examples. For beneficial effect that can be achieved, refer to the foregoing related content.

According to a fourth aspect, a communication apparatus is provided, configured to implement the method in the second aspect. The communication apparatus may be the first device in the second aspect, or an apparatus or a component, for example, a chip, included in the first device.

The communication apparatus includes a corresponding module, unit, or means (means) for implementing the foregoing method. The module, unit, or means may be implemented by hardware, software, or hardware executing corresponding software. The hardware or the software includes a plurality of modules or units corresponding to the foregoing functions.

In some possible implementations, the communication apparatus may include a processing module and a transceiver module. The transceiver module may include a sending module and a receiving module, respectively configured to implement a sending function and a receiving function in any one of the second aspect and the possible implementations of the second aspect. The processing module may be configured to implement a processing function in any one of the second aspect and the possible implementations of the second aspect. For example, the processing module is configured to obtain first information, where the first information includes first indication information, second indication information, and a plurality of user information fields corresponding to a plurality of first devices, the first indication information indicates a number of users, and the second indication information indicates a number of symbols of a training sequence; and the processing module is further configured to parse the first information.

Optionally, the transceiver module and the processing module of the communication apparatus in the fourth aspect may further perform corresponding functions in any one of the second aspect or the possible implementations of the second aspect. For details, refer to the detailed descriptions in the method examples. For beneficial effect that can be achieved, refer to the foregoing related content.

According to a fifth aspect, a communication apparatus is provided. The communication apparatus includes at least one processor. The processor is configured to enable, by executing computer instructions stored in a memory or by using a logic circuit, the communication apparatus to perform the method according to any one of the foregoing aspects or the possible implementations of the foregoing aspects. The communication apparatus may be the second device in any one of the first aspect or the possible implementations of the first aspect, or an apparatus or a component, for example, a chip, included in the second device. Alternatively, the communication apparatus may be the first device in any one of the second aspect or the possible implementations of the second aspect, or an apparatus or a component, for example, a chip, included in the first device.

In some possible implementations, the communication apparatus further includes a memory, configured to store computer instructions and/or a configuration file of the logic circuit. Optionally, the memory and the processor are integrated together, or the memory is independent of the processor.

According to the sixth aspect, a communication apparatus is provided. The communication apparatus includes a processor and a communication interface. The communication interface is configured to input and/or output a signal. The processor is configured to execute a computer program or instructions, to enable the communication apparatus to perform the method according to any one of the foregoing aspects. The communication apparatus may be the second device in any one of the first aspect or the possible implementations of the first aspect, or an apparatus or a component, for example, a chip, included in the second device. Alternatively, the communication apparatus may be the first device in any one of the second aspect or the possible implementations of the second aspect, or an apparatus or a component, for example, a chip, included in the first device.

In some possible implementations, the communication interface is an interface circuit, and is configured to read and write computer instructions. For example, the interface circuit is configured to: receive computer-executable instructions (where the computer-executable instructions are stored in a memory, and may be directly read from the memory, or may be read through another component), and transmit the computer-executable instructions to the processor.

In some possible implementations, the communication interface is configured to communicate with a module outside the communication apparatus.

In some possible implementations, the communication apparatus may be a chip or a chip system. When the apparatus is the chip system, the chip system may include a chip, or may include a chip and another discrete component.

According to a seventh aspect, a communication apparatus is provided. The communication apparatus includes a logic circuit and an interface circuit. The interface circuit is configured to input information and/or output information. The logic circuit is configured to perform the method according to any one of the foregoing aspects, and perform processing and/or generate to-be-output information based on the input information. The communication apparatus may be the second device in any one of the first aspect or the possible implementations of the first aspect, or an apparatus or a component, for example, a chip, included in the second device. Alternatively, the communication apparatus may be the first device in any one of the second aspect or the possible implementations of the second aspect, or an apparatus or a component, for example, a chip, included in the first device.

According to an eighth aspect, a computer-readable storage medium is provided. The computer-readable storage medium stores a computer program or instructions; and when the computer program or the instructions are executed by a processor, the method according to any one of the foregoing aspects is performed.

According to a ninth aspect, a computer program product is provided. When the computer program product is executed by a processor, the method according to any one of the foregoing aspects is performed.

It may be understood that when the communication apparatus provided in any one of the third aspect to the seventh aspect is a chip, the foregoing sending action/function may be understood as outputting information, and the foregoing receiving action/function may be understood as inputting information.

For technical effect brought by any one of the third aspect to the ninth aspect, refer to the technical effect brought by any one of the first aspect or the possible implementations of the first aspect, or refer to the technical effect brought by any one of the second aspect or the possible implementations of the second aspect. Details are not described herein again.

According to a tenth aspect, a communication system is provided. The communication system includes the second device in any one of the first aspect or the possible implementations of the first aspect and the first device in any one of the second aspect or the possible implementations of the second aspect.

### BRIEF DESCRIPTION OF DRAWINGS

FIG. 1 is a diagram of single-user communication according to an embodiment of this application;
FIG. 2 is a diagram of single-user communication according to an embodiment of this application;
FIG. 3 is a diagram of an SU frame according to an embodiment of this application;
FIG. 4 is a diagram of a structure of an SU frame according to an embodiment of this application;
FIG. 5 is a diagram of a communication system according to an embodiment of this application;
FIG. 6 is a diagram of a structure of a communication apparatus according to an embodiment of this application;
FIG. 7 is an interaction diagram of a communication method according to an embodiment of this application;
FIG. 8 is a diagram of first information according to an embodiment of this application;
FIG. 9 is a diagram of first information according to an embodiment of this application;
FIG. 10 is a diagram of first information according to an embodiment of this application;
FIG. 11 is a diagram of first information according to an embodiment of this application;
FIG. 12 is an interaction diagram of a communication method according to an embodiment of this application;
FIG. 13 is a diagram of a structure of a second device according to an embodiment of this application;
FIG. 14 is a diagram of a structure of a first device according to an embodiment of this application; and
FIG. 15 is a diagram of a structure of another communication apparatus according to an embodiment of this application.

### DESCRIPTION OF EMBODIMENTS

The following describes implementations of embodiments of this application in detail with reference to accompanying drawings in this specification.

In descriptions of this application, unless otherwise specified, "/" indicates an "or" relationship between associated objects. For example, A/B may indicate A or B. In this application, "and/or" describes only an association relationship for describing associated objects, and indicates that three relationships may exist. For example, A and/or B may indicate the following three cases: Only A exists, both A and B exist, and only B exists, where A and B may be singular or plural.

In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a number or an execution sequence, and the terms such as "first" and "second" do not indicate a definite difference.

In addition, in embodiments of this application, the word "example" or "for example" represents giving an example, an illustration, or a description. Any embodiment or design solution described as an "example" or "for example" in embodiments of this application should not be explained as being more preferred or having more advantages than another embodiment or design solution. To be precise, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in a plurality of embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on requirements. Correspondingly, the apparatus provided in embodiments of this application may also correspondingly implement these features or functions. Details are not described herein.

In this application, unless otherwise specified, for same or similar parts in embodiments, refer to each other. In various embodiments of this application, unless otherwise specified or if there is a logic conflict, terms and/or descriptions in different embodiments are consistent and may be mutually referenced, and technical features in different embodiments may be combined to form a new embodiment based on an internal logical relationship thereof. The following implementations of this application are not intended to limit the protection scope of this application.

For ease of understanding of the technical solutions in embodiments of this application, the following first briefly describes technologies related to this application.

### (1) Power line communication (power line communication, PLC)

A power line communication system may also be referred to as a power line carrier communication system or a power line network, and is collectively referred to as a power line communication system in this application.

A power line communication technology is a technology that uses an existing power line to transmit an analog signal or a digital signal in a carrier manner, and is a unique communication manner of a power system. A greatest advantage of the power line communication technology is that a network does not need to be re-established, and a device in the power line communication system (for example, the power line communication system may include a CCO and a station) may transmit data through a power line.

International standards of the power line communication technology may include international standards such as the institute of electrical and electronic engineers (institute of electrical and electronic engineers, IEEE) 1901, the IEEE HomePlug AV, and the international telecommunication union telecommunication standardization sector (international telecommunication union telecommunication standardization sector, ITU-T) G.hn.

For example, an application scenario of the power line communication is power grid meter reading. The station in the communication scenario may be a meter. After the CCO delivers collection signaling, the meter may collect data and report the data in a specific time period based on the collection signaling.

### (2) Single-user communication

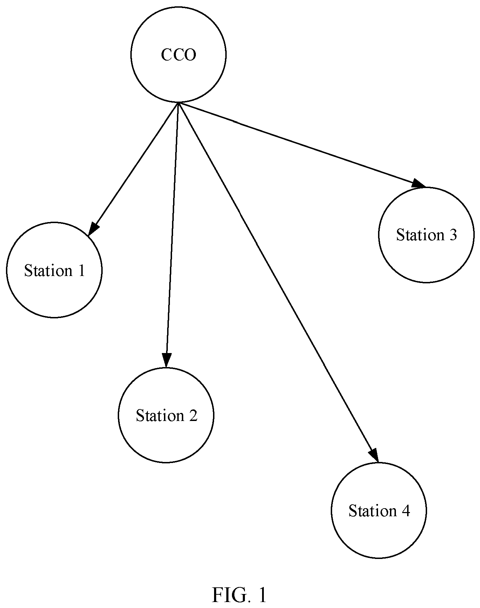

The power line communication is single-user communication, that is, point-to-point communication is performed between the CCO and the station. When the CCO communicates with a plurality of stations, as shown in FIG. 1 below, the CCO may separately communicate with different stations, and may contend for a channel before each communication.

Specifically, the CCO may communicate with different stations in different slots.

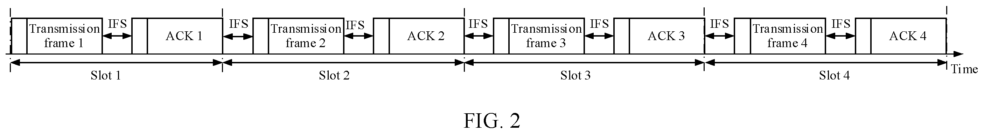

For example, as shown in FIG. 2 below, in a slot 1, the CCO may send a transmission frame 1 to a station 1, and further, the station 1 may send an acknowledge (acknowledge, ACK) 1 to the CCO; in a slot 2, the CCO may send a transmission frame 2 to a station 2, and further, the station 2 may send an ACK 2 to the CCO; in a slot 3, the CCO may send a transmission frame 3 to a station 3, and further, the station 3 may send an ACK 3 to the CCO; and in a slot 4, the CCO may send a transmission frame 4 to a station 4, and further, the station 4 may send an ACK 4 to the CCO.

There is an internal field separator (internal field separator, IFS) (which may also be understood as a frame interval) between frames.

It may be understood that the single-user communication is characterized by a large number of stations, a small service volume, and frequent transmission of a transmission frame between the CCO and the station.

### (3) Single-user (single-user, SU) frame

The transmission frame in FIG. 2 may be an SU frame.

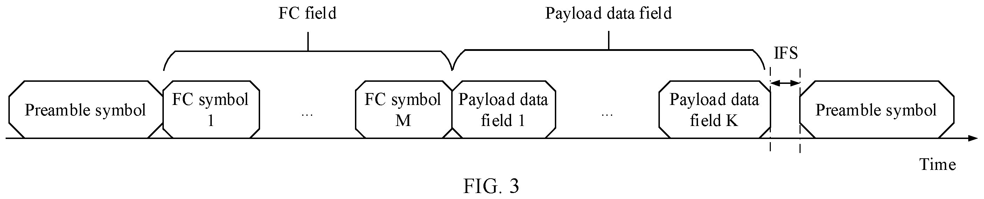

For example, the SU frame may be shown in FIG. 3 below. The SU frame may include a preamble symbol, an FC field (where the FC field may include M FC symbols, and information transmitted on the M FC symbols is the same, that is, the information may be copied to different carriers of the FC symbols in a diversity manner), and one or more payload data fields (for example, K payload data fields).

M and K are positive integers.

The SU frame may be carried in a physical layer protocol data unit (physical protocol data unit, PPDU) sent by a physical layer for transmission.

A preamble sequence on the preamble symbol is a periodic sequence, and may be used for synchronization.

Payload data in the K payload fields may be the same or may be different.

It may be understood that the station may parse the payload data based on the FC field.

For example, a size of the FC field may be 128 bits (bits), and a Turbo code block of the FC field is PB16.

For example, the FC field may include a delimiter type subfield, a network type subfield, a network identifier subfield, a variable area subfield, a standard version number subfield, and a cyclic redundancy check (cyclic redundancy check, CRC) subfield. In the FC field, numbers of bits occupied by the subfields and meanings of the subfields may be specifically shown in Table 1 below.

**Table 1 FC field**

| Subfield | Number of bits | Meaning |
|---|---|---|
| Delimiter type | 3 | Indicate a frame type of an information protocol date unit (message protocol date unit, MPDU). |
| Network type | 5 | Indicate a type of a network in which the station that sends the MPDU is located. |
| Network identifier | 24 | Distinguish between different high-speed carrier communication networks, where each high-speed carrier communication network has a unique network identifier (network identify, NID). |
| Variable area | 68 | Variable area content is determined by the delimiter type. |
| Standard version number | 4 | The standard version number being 0 indicates a first power grid. |
| | | The standard version number being 1 indicates a second power grid. |
| CRC | 24 | Cyclic redundancy check sequence of first 13 bytes of a control frame |

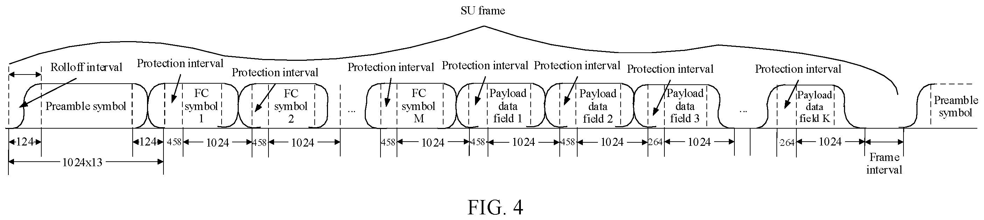

Specifically, a structure of the SU frame in FIG. 3 may be shown in FIG. 4.

A field in the SU frame shown in FIG. 4 may occupy a plurality of orthogonal frequency division multiplexing (orthogonal frequency division multiplexing, OFDM) symbols, and a relationship between the OFDM symbol and the SU frame may be shown in Table 2 below.

**Table 2 Feature of the OFDM symbol**

| Symbol parameter | Number of time domain points | Duration (µs) |
|---|---|---|
| Preamble symbol inverse Fourier transform (inverse fast Fourier transform, IFFT) length | 1024 | 40.96 |
| Frame control field/payload data field IFFT length | 1024 | 40.96 |
| Preamble symbol rolloff interval | 124 | 4.96 |
| Frame control field protection interval | 458 | 18.32 |
| Protection interval between a first OFDM symbol and a second OFDM symbol in the payload data field | 458 | 18.32 |
| Protection interval after a third OFDM symbol in the payload data field | 264 | 10.56 |

The preamble symbol may occupy 13 OFDM symbols, duration of each OFDM symbol is 40.96 µs, and a number of time domain points of each OFDM is 1024.

The FC field may occupy 4 or 12 OFDM symbols, and the FC field is followed by the payload data field.

It may be understood that, because sizes of the preamble symbol and the FC field are fixed, when an amount of the payload data in the PPDU is small, a proportion of the payload data decreases, and correspondingly proportions of the preamble symbol and the FC field increase. This causes a decrease in a throughput, and reduces communication performance.

To resolve the foregoing technical problem, this application provides a communication method. The method includes: A second device obtains first information; and sends the first information, where the first information includes first indication information, second indication information, and a plurality of user information fields corresponding to a plurality of first devices, the first indication information indicates a number of users, and the second indication information indicates a number of symbols of a training sequence.

In embodiments of this application, the second device may simultaneously communicate with the plurality of first devices based on the first information. In addition, the second device may include, in the first information, payload data associated with the plurality of first devices, so that a proportion of the payload data in the first information can increase, a throughput of a communication system can be improved, and communication performance can be improved.

The technical solutions in embodiments of this application may be applied to a power line communication system.

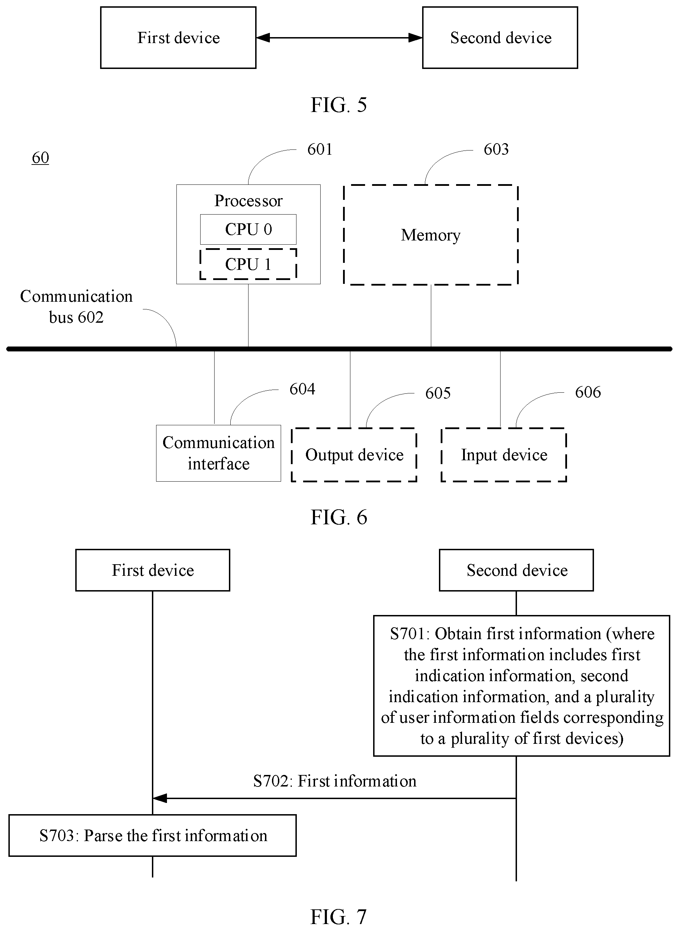

For example, FIG. 5 is a diagram of a structure of a communication system according to this application. The communication system may include one or more first devices (where the first device may be understood as the foregoing station) and one or more second devices (where the second device may be understood as the foregoing CCO).

The communication system may complete a specific function, for example, power grid meter reading.

It may be understood that, unless otherwise specified, the first device in FIG. 5 may be the first device, or may be a component (for example, a processor, a chip, or a chip system) in the first device, or may be a logic module or software that can implement all or some functions of the first device.

It may be understood that, unless otherwise specified, the second device in FIG. 5 may be the second device, or may be a component (for example, a processor, a chip, or a chip system) in the second device, or may be a logic module or software that can implement all or some functions of the station.

The first device in embodiments of this application may be located within a management range of the second device, and the second device may provide a communication service for the first device.

The first device in embodiments of this application may be a device having a transceiver function or a chip or a chip system that may be disposed in the device, may allow a user to access a network, and is a device configured to provide data connectivity for the user.

For example, the first device may be a meter in a power grid, a terminal device in a smart lighting system, a terminal device in a smart photovoltaic system, a terminal device in a fire alarm system, or the like.

The second device in embodiments of this application may be any device that is deployed in a power line communication system and that can communicate with the first device, or may be a chip or a chip system that may be disposed in the device, or may be a logic node, a logic module, or a function implemented by software, and may be configured to implement functions such as a physical control function, resource scheduling and resource management, and access control.

For example, the second device may be a CCO, a head end in the smart lighting system, a head end in the smart photovoltaic system, a head end in the fire alarm system, or the like.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

During specific implementation, as shown in FIG. 5, for example, each first device or each second device may use a composition structure shown in FIG. 6, or include components shown in FIG. 6. FIG. 6 is a diagram of composition of a communication apparatus 60 according to an embodiment of this application. The communication apparatus 60 may be a first device, or a chip or a system on chip in the first device; or may be a second device, or a chip or a system on chip in the second device.

As shown in FIG. 6, the communication apparatus 60 includes one or more processors 601. Further, the communication apparatus 60 may further include a communication bus 602 and at least one communication interface (where FIG. 6 is merely an example, and an example in which the communication apparatus 60 includes a communication interface 604 and one processor 601 is used for description). Optionally, the communication apparatus 60 may further include a memory 603.

The processor 601 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

During specific implementation, in an embodiment, the processor 601 may include one or more CPUs, for example, a CPU 0 and a CPU 1 in FIG. 6.

The communication bus 602 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line indicates the bus in FIG. 6, but this does not mean that there is only one bus or only one type of bus. The communication bus 602 is configured to connect different components in the communication apparatus 60, so that the different components in the communication apparatus 60 can communicate and interact with each other.

The communication interface 604 may be a transceiver module, configured to communicate with another device or a communication network. The communication network may be, for example, an ethernet (Ethernet), a radio access network (radio access network, RAN), or a wireless local area network (wireless local area network, WLAN). For example, the communication interface 604 may be an apparatus, for example, a transceiver or a transceiver machine. Alternatively, the communication interface 604 may be a transceiver circuit located in the processor 601, and is configured to implement signal input and signal output of the processor.

The memory 603 may be an apparatus having a storage function. For example, the memory 603 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can be accessed by a computer and that can be configured to carry or store expected program code in a form of instructions or a data structure. However, this is not limited thereto. The memory may exist independently, and is connected to the processor through the communication bus 602. The memory may alternatively be integrated with the processor.

For example, the memory 603 is configured to store computer-executable instructions for executing the solutions of this application, and the processor 601 controls the execution. The processor 601 is configured to execute the computer-executable instructions stored in the memory 603, to implement the method provided in embodiments of this application.

Alternatively, optionally, in embodiments of this application, the processor 601 may perform processing-related functions in method provided in the following embodiments of this application, and the communication interface 604 is responsible for communicating with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the communication apparatus 60 may further include an output device 605 and an input device 606. The output device 605 communicates with the processor 601, and may display information in a plurality of manners. For example, the output device 605 may be a liquid crystal display (liquid crystal display, LCD), a light-emitting diode (light-emitting diode, LED) display device, a cathode ray tube (cathode ray tube, CRT) display device, or a projector (projector). The input device 606 communicates with the processor 601, and may receive an input of a user in a plurality of manners. For example, the input device 606 may be a mouse, a keyboard, a touchscreen device, or a sensor device.

It should be noted that the composition structure shown in FIG. 6 does not constitute a limitation on the communication apparatus. In addition to the components shown in FIG. 6, the communication apparatus may include more or fewer components than those shown in the figure, some components may be combined, or different component arrangements may be used.

The following describes the communication method provided in embodiments of this application with reference to the accompanying drawings. It may be understood that, in embodiments of this application, the first device or the second device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

FIG. 7 is an interaction diagram of a communication method according to this application. The communication method is described by using interaction between a first device and a second device as an example. Certainly, an action of the first device in the method may alternatively be performed by an apparatus/module in the first device, for example, a chip, a processor, or a processing unit in the first device; and an action of the second device in the method may alternatively be performed by an apparatus/module in the second device, for example, a chip, a processor, or a processing unit in the second device. This is not specifically limited in embodiments of this application. Processing performed by a single execution body (the first device or the second device) shown in embodiments of this application may alternatively be performed by a plurality of execution bodies. These execution bodies may be logically and/or physically separated. For example, as shown in FIG. 7, the communication method includes the following steps.

S701: The second device obtains first information.

The first information includes first indication information, second indication information, and a plurality of user information fields corresponding to a plurality of first devices.

### (1) First indication information

The first indication information indicates a number of users.

For example, the first indication information is 2 bits. When a bit value is 00, it may indicate that the number of users is 1; when a bit value is 01, it may indicate that the number of users is 2; when a bit value is 10, it may indicate that the number of users is 3; or when a bit value is 11, it may indicate that the number of users is 4.

Optionally, a first FC field includes the first indication information.

The first FC field is located in the first information, and the first FC field may be the FC field shown in FIG. 3 or FIG. 4.

It may be understood that the first FC field includes the first indication information, and is compatible with single-user communication and multi-user communication.

### (2) Second indication information

The second indication information indicates a number of symbols of a training sequence (training field, TF).

In a possible implementation, the second indication information may occupy 2 bits.

For example, assuming that the number of symbols of the training sequence may meet the following formula: (TF_Num+1)*2 (where a value of TF_Num is a bit value of the second indication information), when the bit value is 00, it may indicate that the number of symbols of the training sequence is (0+1)*2=2; when the bit value is 01, the number of symbols of the training sequence is (1+1)*2=4; when the bit value is 10, the number of symbols of the training sequence is (2+1)*2=6; or when the bit value is 11, the number of symbols of the training sequence is (3+1)*2=8.

For another example, assuming that the number of symbols of the training sequence may meet the following formula: TF_Num*2 (where a value of TF_Num is a bit value of the second indication information), when the bit value is 00, the number of symbols of the training sequence is 0*2=0; when the bit value is 01, the number of symbols of the training sequence is 1*2=2; when the bit value is 10, the number of symbols of the training sequence is 2*2=4; or when the bit value is 11, the number of symbols of the training sequence is 3*2=6.

It may be understood that the training sequence is predefined. In time domain, training sequences associated with the plurality of first devices are the same. In frequency domain, each resource unit corresponds to one training sequence (where a sum of training sequences corresponding to all resource units is a training sequence corresponding to a full frequency band), and the training sequence associated with the first device may be determined based on the resource unit associated with the first device.

For example, a number of resource units is 4. A training sequence corresponding to a resource unit 1 may be a training sequence 1, a training sequence corresponding to a resource unit 2 may be a training sequence 2, a training sequence corresponding to a resource unit 3 may be a training sequence 3, and a training sequence corresponding to a resource unit 4 may be a training sequence 4.

The training sequence 1, the training sequence 2, the training sequence 3, and the training sequence 4 may form the training sequence corresponding to the full frequency band.

For example, when the first device communicates with the second device on the resource unit 1, the first device may perform channel estimation on a downlink channel (namely, a downlink channel between the first device and the second device) based on the training sequence 1. Correspondingly, the second device may perform channel estimation on an uplink channel (namely, an uplink channel between the first device and the second device) based on the training sequence 1.

Optionally, a second FC field may include the second indication information.

The second FC field is located in the first information, and the second FC field is a newly added FC field.

A number of bits occupied by the second FC field is the same as a number of bits occupied by the first FC field, so that when there is the first FC field, the second device can simultaneously communicate with the plurality of first devices.

It may be understood that the second FC field may occupy 128 bits, and a Turbo code block of the second FC field is PB16, so that it can be ensured that a number of OFDM symbols occupied by the second FC field remains within a specific range, and is compatible with a size of a PB in a power line communication system.

### (3) User information field

For example, when the first indication information indicates that the number of users is 4, the first information may include a user information field 0 associated with a first device 0, a user information field 1 associated with a first device 1, a user information field 2 associated with a first device 2, and a user information field 3 associated with a first device 3.

It may be understood that user information fields associated with different first devices include a same type of subfields, and values of the subfields may be the same or may be different, so that the second device can flexibly indicate user information of the first devices by using user information fields associated with the different first devices, and the second device can simultaneously communicate with the plurality of first devices.

Optionally, the user information field may include one or both of the following: an identification information field or a first field.

The identification information field indicates identification information of the first device.

For example, the identification information of the first device may be a unique identification code of the first device, or the identification information of the first device may be a media access control (media access control, MAC) address of the first device, or the identification information of the first device may be an internet protocol (internet protocol, IP) address of the first device, or the identification information of the first device may be a reallocated identification code (for example, if there are four first devices, an identification code of the first device 0 is 00, an identification code of the first device 1 is 01, an identification code of the first device 2 is 10, and an identification code of the first device 3 is 11).

In a possible implementation, the identification information field may occupy 11 bits.

It may be understood that the first device may determine the identification information of the first device based on the identification information field, and may determine the user information field associated with the first device.

The first field indicates one or more of the following: a modulation and coding scheme, a code rate, or a size of each physical block.

The size of each physical block may be any one of the following: 16 bytes, 40 bytes, 72 bytes, 136 bytes, 264 bytes, or 520 bytes.

For example, the first device may determine a specific position of the physical block based on the size of each physical block and a number of physical blocks, so that payload data on the physical block can be parsed.

For the number of physical blocks, refer to the following descriptions of a physical block field. Details are not described herein.

In a possible implementation, the first field may occupy 6 bits.

It may be understood that the first device may determine a position of the payload data based on the size of the physical block in the first field, and parse the payload data based on the modulation and coding scheme and the code rate in the first field, so that communication effectiveness can be improved.

Based on the foregoing descriptions of the user information field, it may be understood that the second device may sequentially arrange user information subfields associated with the first devices.

Optionally, the second FC field may include a plurality of user information fields.

In a possible implementation, the second FC field may include a maximum of four user information fields.

For example, when the number of users is 4, the second FC field may include a user information field (for example, the user information field 0) associated with the first device 0, a user information field (for example, the user information field 1) associated with the first device 1, a user information field (for example, the user information field 2) associated with the first device 2, and a user information field (for example, the user information field 3) associated with the first device 3.

Optionally, a number of second FC fields may be determined based on the number of users, that is, when the number of users is X, the number of second FC fields may be $\left⌈X/4\right⌉$.$\left⌈⋅\right⌉$ is obtained by performing a ceiling operation, and X is a positive integer.

For example, when the number of users is 7, the number of second FC fields may be 2; or when the number of users is 15, the number of second FC fields may be 4.

For example, the number of users is 7. A second FC field 1 may include a user information field (for example, the user information field 0) associated with the first device 0, a user information field (for example, the user information field 1) associated with the first device 1, a user information field (for example, the user information field 2) associated with the first device 2, and a user information field (for example, the user information field 3) associated with the first device 3. A second FC field 2 may include a user information field (for example, a user information field 5) associated with a first device 5, a user information field (for example, a user information field 6) associated with a first device 6, and a user information field (for example, a user information field 7) associated with a first device 7.

It should be noted that for a plurality of second FC fields in a same piece of first information, numbers of symbols of training sequences indicated by second indication information in the second FC fields are the same.

S702: The second device sends the first information to the plurality of first devices. Correspondingly, the first device receives the first information from the second device.

The second device may map the first information to a time domain or frequency domain to form a signal, and send the signal to the first device. Correspondingly, the first device may receive the signal from the second device, and obtain the first information in the signal.

S703: The first device parses the first information.

Based on the communication method shown in FIG. 7, the second device may simultaneously communicate with the plurality of first devices based on the first information. In addition, the second device may include, in the first information, payload data associated with the plurality of first devices, so that a proportion of the payload data in the first information can increase, a throughput of a communication system can be improved, and communication performance can be improved.

Based on the foregoing descriptions of the first information in FIG. 7, this application provides two possible designs.

In a first possible design, the first information may be a downlink frame.

When the first information is the downlink frame, the first information may include the payload data, and payload data associated with different first devices may be transmitted on different resource units.

The downlink frame may be considered as a downlink data frame.

Optionally, each user information field may include a physical block field.

The physical block field indicates a number of physical blocks occupied by the first device.

In a possible implementation, a number of bits occupied by the physical block field may be determined based on the first indication information.

For example, when the number of users indicated by the first indication information is less than 4, the number of bits occupied by the physical block field is 4; or when the number of users indicated by the first indication information is equal to 4, the number of bits occupied by the physical block field is 1.

For example, the number of bits occupied by the physical block field is 4. When a bit value is 0000, it may indicate that the number of physical blocks is 1; when a bit value is 0001, it may indicate that the number of physical blocks is 2; and by analogy, when a bit value is 1111, it may indicate that the number of physical blocks is 16.

For another example, a number of bits occupied by the physical block is 1. When a bit value is 0, it may indicate that the number of physical blocks is 1; or when a bit value is 1, it may indicate that the number of physical blocks is 2.

It may be understood that the first device may determine, based on the first indication information, the number of bits occupied by the physical block field, to provide a feasible solution for determining the number of bits occupied by the physical block field. When there are a large number of users, a number of bits occupied by a physical block field in each user information field may be reduced, so that a number of bits occupied by each user information field can be limited within a specific range, and transmission overheads can be reduced.

Optionally, each user information field may further include one or both of the following: a copy field or a resource unit field.

The copy field indicates a number of copy times, and the number of copy times indicates a number of repetitions of the payload data.

In a possible implementation, the copy field may occupy 2 bits.

For example, when a bit value is 00, it may indicate that the number of copy times is 1 (that is, the payload data may be transmitted once); when a bit value is 01, it may indicate that the number of copy times is 2 (that is, the payload data may be simultaneously transmitted on two different subcarriers); when a bit value is 10, it may indicate that the number of copy times is 4 (that is, the payload data may be simultaneously transmitted on four different subcarriers); or when a bit value is 11, it may indicate that the number of copy times is 7 (that is, the payload data may be simultaneously transmitted on seven different subcarriers).

For another example, when a bit value is 00, it may indicate that the number of copy times is 1; when a bit value is 01, it may indicate that the number of copy times is 2; when a bit value is 10, it may indicate that the number of copy times is 3; or when a bit value is 11, it may indicate that the number of copy times is 4.

It may be understood that the first device may determine, based on the copy field, a number of times of simultaneously transmitting the payload data, and may superimpose the received payload data, so that a bit error rate of the payload data can be reduced, and communication reliability can be improved.

Optionally, the number of copy times may be determined based on channel quality.

The channel quality may be determined based on a reference signal. To be specific, the first device may send the reference signal to the second device, and the second device may perform channel estimation based on the reference signal, to determine the channel quality.

It may be understood that the first device may periodically send the reference signal to the second device.

For example, the first device sends the reference signal to the second device at a moment 1 and a moment 2. The second device may receive the reference signal from the first device at the moment 1, determine the channel quality based on the reference signal, and determine the number of copy times (for example, 4) based on the channel quality. The number of copy times between the moment 1 and the moment 2 is 4.

It may be understood that when the channel quality is good, the payload data may be transmitted based on a small number of copy times, so that transmission overheads can be reduced; or when the channel quality is poor, the payload data may be transmitted based on a large number of copy times, so that communication reliability can be improved.

The resource unit field indicates an index of a resource unit associated with the first device.

In a possible implementation, a number of bits occupied by the resource unit field may be 5.

For example, when a bit value is 00000, it may indicate that an index of a resource unit is 0, and the resource unit (for example, a resource unit 0) corresponding to the index 0 may be determined; or when a bit value is 00001, it may indicate that an index of a resource unit is 1, and the resource unit (for example, a resource unit 1) corresponding to the index 1 may be determined; and by analogy, when a bit value is 11111, it may indicate that an index of a resource unit is 31, and the resource unit (for example, a resource unit 31) corresponding to the index 31 may be determined.

It may be understood that the first device may determine, based on the resource unit field, the index of the resource unit associated with the first device. Because different first devices are associated with different resource units, the second device may simultaneously communicate with the plurality of first devices on different resource units. That is, the second device may include, in the first information, the payload data associated with the plurality of first devices, so that the proportion of the payload data can increase, the throughput of the communication system can be improved, and the communication performance can be improved.

Optionally, the first information may further include a second training sequence.

For example, the number of users is 4. Assuming that the second device communicates with the first device 0 on the resource unit 0, the second device communicates with the first device 1 on the resource unit 1, the second device communicates with the first device 2 on the resource unit 2, and the second device communicates with the first device 3 on the resource unit 3, a second training sequence corresponding to the first device 0 may be a training sequence associated with the resource unit 0, a second training sequence corresponding to the first device 1 may be a training sequence associated with the resource unit 1, a second training sequence corresponding to the first device 2 may be a training sequence associated with the resource unit 2, and a second training sequence corresponding to the first device 3 may be a training sequence associated with the resource unit 3.

The second training sequence may be determined based on the second indication information.

For example, when the second indication information indicates that the number of symbols of the training sequence is 4, the second training sequence may include four training sequences.

For example, based on the foregoing example of the second training sequence corresponding to the first device, the second training sequence corresponding to the first device 0 may be four training sequences associated with the resource unit 0, the second training sequence corresponding to the first device 1 may be four training sequences associated with the resource unit 1, the second training sequence corresponding to the first device 2 may be four training sequences associated with the resource unit 2, and the second training sequence corresponding to the first device 3 may be four training sequences associated with the resource unit 3.

It may be understood that the first device may perform channel estimation on a downlink channel based on the second training sequence, to determine a channel feature of the downlink channel, and may parse the payload data based on the channel feature, so that communication reliability can be improved.

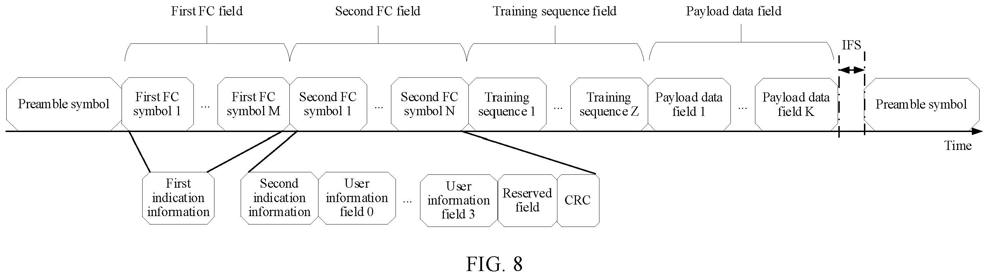

Based on the foregoing descriptions that the first information is a downlink frame, this application provides a possible embodiment. As shown in FIG. 8, the first information may include a preamble symbol, a first FC field (where the first FC field may include M first FC symbols, and information transmitted on the M first FC symbols is the same, that is, the information may be copied to different carriers of the first FC symbols in a diversity manner), a second FC field (where the second FC field may include N second FC symbols, and information transmitted on the N second FC symbols is the same, that is, the information may be copied to different carriers of the second FC symbols in a diversity manner), a training sequence field (for example, the training sequence field includes Z training sequences), and one or more payload data fields (for example, K payload data fields, where payload data in the K payload data fields may be the same or may be different).

M, N, Z, and K are all positive integers.

Each first FC field includes the first indication information, and each second FC field includes the second indication information and the user information field.

For example, when the number of users is 4, meanings of each field in the first information, a number of bits of each field, and a number of occupied bits may be shown in Table 3 below.

**Table 3 First information**

| Field | Subfield | Number of occupied bits | Meaning |
|---|---|---|---|
| First FC field | First indication information | 2 | The number of users is 4. |
| Second FC field | Second indication information | 2 | The number of symbols of the training sequence is (TF_Num+1)*2. |
| | User information field 0 | 25 | [11:0]: Identification information field associated with the first device 0 |
| | | | [16:12]: First field associated with the first device 0 |
| | | | [21:17]: Resource unit field associated with the first device 0 |
| | | | [23:22]: Copy field associated with the first device 0 |
| | | | [24]: Physical block field associated with the first device 0 |
| | User information field 1 | 25 | [11:0]: Identification information field associated with the first device 1 |
| | | | [16:12]: First field associated with the first device 1 |
| | | | [21:17]: Resource unit field associated with the first device 1 |
| | | | [23:22]: Copy field associated with the first device 1 |
| | | | [24]: Physical block field associated with the first device 1 |
| | User information field 2 | 25 | [11:0]: Identification information field associated with the first device 2 |
| | | | [16:12]: First field associated with the first device 2 |
| | | | [21:17]: Resource unit field associated with the first device 2 |
| | | | [23:22]: Copy field associated with the first device 2 |
| | | | [24]: Physical block field associated with the first device 2 |
| | User information field 3 | 25 | [11:0]: Identification information field associated with the first device 3 |
| | | | [16:12]: First field associated with the first device 3 |
| | | | [21:17]: Resource unit field associated with the first device 3 |
| | | | [23:22]: Copy field associated with the first device 3 |
| | | | [24]: Physical block field associated with the first device 3 |
| | Reserved field | 2 | |
| | CRC | 24 | CRC check bit |

Based on the foregoing descriptions in Table 3 and FIG. 8, it may be understood that when the number of users is 4, [26:2] (25 bits in total) in the second FC field is the user information field 0; [51:27] (25 bits in total) in the second FC field is the user information field 1; [76:52] (25 bits in total) in the second FC field is the user information field 2; [101:77] (25 bits in total) in the second FC field is the user information field 3; [103:102] in the second FC field is the reserved field; and [127:104] in the second FC field is the CRC check bit.

When the number of users is 3, [29:2] (28 bits in total) in the second FC field is the user information field 0; [56:30] (28 bits in total) in the second FC field is the user information field 1; [83:57] (28 bits in total) in the second FC field is the user information field 2; [103:84] in the second FC field is the reserved field; and [127:104] in the second FC field is the CRC check bit.

When the number of users is 2, [29:2] (28 bits in total) in the second FC field is the user information field 0; [56:30] (28 bits in total) in the second FC field is the user information field 1; [103:57] in the second FC field is the reserved field; and [127:104] in the second FC field is the CRC check bit.

[b:a] (a<b) indicates that bits occupied by the field are a to b.

It may be understood that in comparison with a case in which the number of bits occupied by the physical block field is 1 when the number of users is 4, when the number of users is less than 4, the number of bits occupied by the physical block field may be 4. In this case, the number of bits occupied by the user information field is 28.

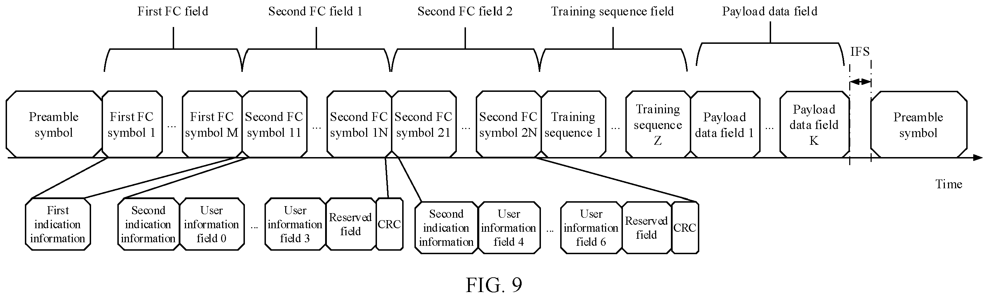

It may be understood that when the number of users is greater than 4, a number of second FC fields is greater than 1. The first information may be shown in FIG. 9. For example, the number of users is 7. The first information may include a preamble symbol, a first FC field (where the first FC field may include M first FC symbols, and information transmitted on the M first FC symbols is the same, that is, the information may be copied to different carriers of the first FC symbols in a diversity manner), a second FC field 1 (where the second FC field 1 may include N second FC symbols 1, and information transmitted on the N second FC symbols 1 is the same, that is, the information may be copied to different carriers of the second FC symbols 1 in a diversity manner), a second FC field 2 (where the second FC field 2 may include N second FC symbols 2, and information transmitted on the N second FC symbols 2 is the same, that is, the information may be copied to different carriers of the second FC symbols 2 in a diversity manner), a training sequence field (for example, the training sequence field includes Z training sequences), and one or more payload data fields (for example, K payload data fields, where payload data in the K payload data fields may be the same or may be different).

M, N, Z, and K are all positive integers.

The second FC field 1 is the same as the second FC field in FIG. 8.

A second FC field 2 may be newly added after the second FC field 1, second indication information in the second FC field 2 is consistent with second indication information in the second FC field 1 (that is, numbers of training sequences indicated by the second indication information are the same), and a user information field in the second FC field 2 is a user information field (for example, the user information field 4) associated with the first device 4, a user information field (for example, the user information field 5) associated with the first device 5, and a user information field (for example, the user information field 6) associated with the first device 6.

Content of the user information field 4, the user information field 5, and the user information field 6 is similar to content of the user information field in Table 3. Details are not described herein.

In a second possible design, the first information may be a trigger frame.

The trigger frame may also be considered as a downlink frame.

Optionally, based on the first information shown in FIG. 7, the first information may further include third indication information.

The third indication information indicates whether at least one index, of the resource unit associated with the first device, that is greater than a first value exists.

The first value is a positive integer (for example, the first value may be 14).

For example, the third indication information is one bit. When a bit value is 1, it may indicate that the at least one index, of the resource unit associated with the first device, that is greater than the first value exists; or when a bit value is 0, it may indicate that the at least one index, of the resource unit associated with the first device, that is greater than the first value does not exist. Alternatively, when a bit value is 0, it may indicate that the at least one index, of the resource unit associated with the first device, that is greater than the first value exists; or when a bit value is 1, it may indicate that the at least one index, of the resource unit associated with the first device, that is greater than the first value does not exist.

It may be understood that when the third indication information indicates that the at least one index, of the resource unit associated with the first device, that is greater than the first value exists, it may be determined that a maximum value of the index of the resource unit is greater than the first value, so that a number of bits occupied by a resource unit field can be large, and it can be ensured as much as possible that the resource unit field can indicate indexes of all resource units. When the third indication information indicates that the at least one index, of the resource unit associated with the first device, that is greater than the first value does not exist, it may be determined that a maximum value of the index of the resource unit is less than or equal to the first value, so that a number of bits occupied by a resource unit field can be small, and transmission overheads can be reduced.

Optionally, a first FC frame may include the third indication information.

Optionally, when the number of users is equal to 4, the first information may further include a physical block field (where numbers of physical blocks occupied by different first devices are the same); or when the number of users is less than 4, each user information field may further include a physical block field (where numbers of physical blocks occupied by different first devices may be the same or may be different).

It may be understood that a position of the physical block field may be determined based on the number of users, to provide a feasible solution for determining the position of the physical block field. When the first information includes the physical block field, different first devices occupy a same number of physical blocks, so that a number of bits occupied by the physical block field can be reduced, and transmission overheads can be reduced. When each user information field includes the physical block field, numbers of physical blocks occupied by different first devices may be the same or may be different, so that the number of physical blocks occupied by each first device may be determined based on an actual communication status of each first device, and flexibility of determining the number of physical blocks occupied by each first device can be improved.

It may be understood that when the first information includes the physical block field, the physical block field may be located in a second FC frame.

In a possible implementation, the number of bits occupied by the physical block field may be determined based on the first indication information; or the number of bits occupied by the physical block field may be determined based on the first indication information and the third indication information.

For example, when the number of users indicated by the first indication information is less than 4, the number of bits occupied by the physical block field is 4; or when the number of users indicated by the first indication information is equal to 4, and the third indication information indicates that the at least one index, of the resource unit associated with the first device, that is greater than the first value does not exist, the number of bits occupied by the physical block field is 4; or when the number of users indicated by the first indication information is equal to 4, and the third indication information indicates that the at least one index, of the resource unit associated with the first device, that is greater than the first value exists, the number of bits occupied by the physical block field is 2.

For example, the number of bits occupied by the physical block field is 2. When a bit value is 00, it may indicate that the number of physical blocks is 1; when a bit value is 01, it may indicate that the number of physical blocks is 2; when a bit value is 10, it may indicate that the number of physical blocks is 3; or when a bit value is 11, it may indicate that the number of physical blocks is 4.

Based on this possible implementation, the number of bits occupied by the physical block field may be determined in the foregoing two methods. In addition, a number of bits occupied by a physical block is determined in the foregoing methods, so that when there is a large number of users, it can be ensured as much as possible that a number of bits occupied by the first information is limited within a specific range, and transmission overheads can be reduced.

Optionally, each user information field may include a power control field.

The power control field indicates a transmit power of the first device.

In a possible implementation, the power control field may be 3 bits.

For example, the power control field indicates an index of the transmit power of the first device. When a bit value is 000, it may indicate that the index of the transmit power of the first device is 0, and it may be determined, based on the index 0, that the transmit power of the first device is a transmit power 0; when a bit value is 001, it may indicate that the index of the transmit power of the first device is 1, and it may be determined, based on the index 1, that the transmit power of the first device is a transmit power 1; and by analogy, when a bit value is 111, it may indicate that the index of the transmit power of the first device is 7, and it may be determined, based on the index 7, that the transmit power of the first device is a transmit power 7.

It may be understood that the transmit power of the first device may be attenuated based on the power control field, to avoid an excessively large difference between PSDs of signals from different first devices to the second device. This can avoid, as much as possible, interference caused when different first devices communicate with the second device due to an excessively high transmit power, and can also avoid, as much as possible, poor communication quality caused by an excessively low transmit power, so that communication reliability can be improved.

Optionally, each user information field may further include a resource unit field.

The resource unit field indicates an index of a resource unit associated with the first device.

It may be understood that the first device may determine, based on the resource unit field, the index of the resource unit associated with the first device. Because different first devices are associated with different resource units, the second device may simultaneously communicate with the plurality of first devices on different resource units. That is, the second device may include, in the first information, the payload data associated with the plurality of first devices, so that the proportion of the payload data can increase, the throughput of the communication system can be improved, and the communication performance can be improved.

In a possible implementation, a number of bits occupied by the resource unit field is determined based on the third indication information.

For example, when the third indication information indicates that the at least one index, of the resource unit associated with the first device, that is greater than the first value does not exist, the number of bits occupied by the resource unit field is 4; or when the third indication information indicates that the at least one index, of the resource unit associated with the first device, that is greater than the first value exists, the number of bits occupied by the resource unit field is 5.

For example, the number of bits occupied by the resource unit field is 4. When a bit value is 0000, it may indicate that an index of a resource unit is 0, and the resource unit (for example, a resource unit 0) corresponding to the index 0 may be determined; or when a bit value is 0001, it may indicate that an index of a resource unit is 1, and the resource unit (for example, a resource unit 1) corresponding to the index 1 may be determined; and by analogy, when a bit value is 1111, it may indicate that an index of a resource unit is 15, and the resource unit (for example, a resource unit 15) corresponding to the index 15 may be determined.

Based on this possible implementation, the number of bits occupied by the resource unit field may be determined based on the third indication information, so that it can be ensured as much as possible that the resource unit field indicates an index of a resource unit associated with each first device, to provide a feasible solution for determining the number of bits occupied by the resource unit field.

Optionally, each user information field may further include a copy field.

It may be understood that a number of times of simultaneously transmitting the payload data may be determined based on the copy field, so that a bit error rate of the payload data can be reduced, and communication reliability can be improved.

In a possible implementation, a number of bits occupied by the copy field may be determined based on the first indication information.

For example, when the number of users indicated by the first indication information is less than 4, the number of bits occupied by the copy field is 2; or when the number of users indicated by the first indication information is equal to 4, the number of bits occupied by the copy field is 1.

For example, the copy field is 2 bits. When a bit value is 00, it may indicate that the number of copy times is 1; when a bit value is 01, it may indicate that the number of copy times is 2; when a bit value is 10, it may indicate that the number of copy times is 4; or when a bit value is 11, it may indicate that the number of copy times is 7.

For another example, the number of copy times is 1 bit. When a bit value is 0, it may indicate that the number of copy times is 1; or when a bit value is 1, it may indicate that the number of copy times is 2.

Based on this possible implementation, the number of bits occupied by the copy field may be determined based on the first indication information. When there are a large number of users, the number of bits occupied by the first information can be limited to the specific range as much as possible, and transmission overheads can be reduced.

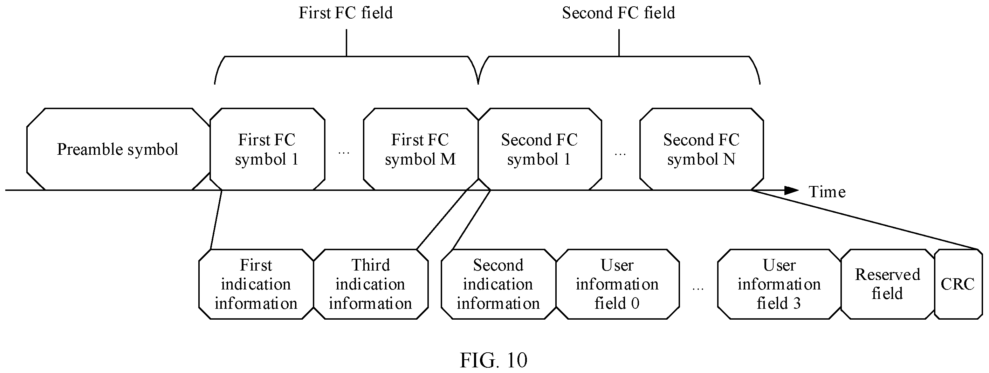

Based on the foregoing descriptions that the first information is a trigger frame, this application provides a possible embodiment. As shown in FIG. 10, the first information may include a preamble symbol, a first FC field (where the first FC field may include M first FC symbols, and information transmitted on the M first FC symbols is the same, that is, the information may be copied to different carriers of the first FC symbols in a diversity manner), a second FC field (where the second FC field may include N second FC symbols, and information transmitted on the N second FC symbols is the same, that is, the information may be copied to different carriers of the second FC symbols in a diversity manner), a training sequence field (for example, the training sequence field includes Z training sequences), and one or more payload data fields (for example, K payload data fields, where payload data in the K payload data fields may be the same or may be different).

The first FC field may include the first indication information and the third indication information, and the second FC field may include the second indication information and the user information field.

For example, when the number of users is 4, and the third indication information indicates that the at least one index, of the resource unit associated with the first device, that is greater than 14 exists, meanings of each field in the first information, a number of bits of each field, and a number of occupied bits may be shown in Table 4 below.

**Table 4 First information**

| Field | Subfield | Number of bits | Meaning |
|---|---|---|---|
| First FC field | First indication information | 2 | The number of users is 4. |
| | Third indication information | 1 | Indicates that the at least one index, of the resource unit associated with the first device, that is greater than 14 exists. |
| Second FC field | Second indication information | 2 | The number of symbols of the training sequence is (TF_Num+1)*2. |
| | Physical block field | 2 | Numbers of physical blocks occupied by different first devices |
| | User information field 0 | 25 | [11:0]: Identification information field associated with the first device 0 |
| | | | [15:12]: First field associated with the first device 0 |
| | | | [18:16]: Power control field associated with the first device 0 |
| | | | [23:19]: Resource unit field associated with the first device 0 |
| | | | [24]: Copy field associated with the first device 0 |
| | User information field 1 | 25 | [11:0]: Identification information field associated with the first device 1 |
| | | | [15:12]: First field associated with the first device 1 |
| | | | [18:16]: Power control field associated with the first device 1 |
| | | | [23:19]: Resource unit field associated with the first device 1 |
| | | | [24]: Copy field associated with the first device 1 |
| | User information field 2 | 25 | [11:0]: Identification information field associated with the first device 2 |
| | | | [15:12]: First field associated with the first device 2 |
| | | | [18:16]: Power control field associated with the first device 2 |
| | | | [23:19]: Resource unit field associated with the first device 2 |
| | | | [24]: Copy field associated with the first device 2 |
| | User information field 3 | 25 | [11:0]: Identification information field associated with the first device 3 |
| | | | [15:12]: First field associated with the first device 3 |
| | | | [18:16]: Power control field associated with the first device 3 |
| | | | [23:19]: Resource unit field associated with the first device 3 |
| | | | [24]: Copy field associated with the first device 3 |
| | Reserved field | 0 | |
| | CRC | 24 | CRC check bit |

Based on the descriptions in FIG. 10 and Table 4, it may be understood that when the third indication information indicates that the at least one index, of the resource unit associated with the first device, that is greater than 14 does not exist and the number of users is 4, [5:2] (4 bits in total) in the second FC field is the number of physical blocks; [29:6] (24 bits in total) in the second FC field is the user information field 0; [53:30] (24 bits in total) in the second FC field is the user information field 1; [77:54] (24 bits in total) in the second FC field is the user information field 2; [101:78] (24 bits in total) in the second FC field is the user information field 3; [103:102] in the second FC field is the reserved field; and [127:104] in the second FC field is the CRC check bit.

In comparison with a case in which the number of bits occupied by the resource unit field is 5 in Table 4, when the third indication information indicates that the at least one index, of the resource unit associated with the first device, that is greater than 14 does not exist, the number of bits occupied by the resource unit field is 4, and the number of bits occupied by the user information field is 24.

When the third indication information indicates that the at least one index, of the resource unit associated with the first device, that is greater than 14 does not exist and the number of users is 3, [5:2] (4 bits in total) in the second FC field is the number of physical blocks; [30:6] (25 bits in total) in the second FC field is the user information field 0; [55:31] (25 bits in total) in the second FC field is the user information field 1; [80:56] (25 bits in total) in the second FC field is the user information field 2; [103:81] in the second FC field is the reserved field; and [127:104] in the second FC field is the CRC check bit.

When the third indication information indicates that the at least one index, of the resource unit associated with the first device, that is greater than 14 does not exist and the number of users is 2, [5:2] (4 bits in total) in the second FC field is the number of physical blocks; [30:6] (25 bits in total) in the second FC field is the user information field 0; [55:31] (25 bits in total) in the second FC field is the user information field 1; [103:56] in the second FC field is the reserved field; and [127:104] in the second FC field is the CRC check bit.

In comparison with a case in which the number of bits occupied by the copy field is 1 and the number of bits occupied by the resource unit is 5 in Table 4, when the number of users is less than 4, the number of bits occupied by the copy field is 2; and when the third indication information indicates that the at least one index, of the resource unit associated with the first device, that is greater than 14 does not exist, the number of bits occupied by the resource unit field is 4, and the number of bits occupied by the user information field is 25.

It may be understood that when the third indication information indicates that the at least one index, of the resource unit associated with the first device, that is greater than 14 exists and the number of users is 4, [3:2] (2 bits in total) in the second FC field is the number of physical blocks; [28:4] (25 bits in total) in the second FC field is the user information field 0; [53:30] in the second FC field is a user information field 1 of a STA 1; [77:54] in the second FC field is the user information field 2; [101:78] in the second FC field is the user information field 3; [103:102] in the second FC field is the reserved field; and [127:104] in the second FC field is the CRC check bit.

When the third indication information indicates that the at least one index, of the resource unit associated with the first device, that is greater than 14 exists and the number of users is 3, [5:2] (4 bits in total) in the second FC field is the number of physical blocks; [31:6] (26 bits in total) in the second FC field is the user information field 0; [57:32] (26 bits in total) in the second FC field is the user information field 1; [82:57] (26 bits in total) in the second FC field is the user information field 2; [103:83] in the second FC field is the reserved field; and [127:104] in the second FC field is the CRC check bit.

When the third indication information indicates that the at least one index, of the resource unit associated with the first device, that is greater than 14 exists and the number of users is 2, [5:2] (4 bits in total) in the second FC field is the number of physical blocks; [31:6] (26 bits in total) in the second FC field is the user information field 0; [57:32] (26 bits in total) in the second FC field is the user information field 1; [103:58] in the second FC field is the reserved field; and [127:104] in the second FC field is the CRC check bit.

In comparison with a case in which the number of bits occupied by the copy field is 1 in Table 4, when the number of users is less than 4, the number of bits occupied by the copy field is 2, and the number of bits occupied by the user information field is 26.

[b:a] (a<b) indicates that bits occupied by the field are a to b.

In the foregoing several cases, a bit occupied by a subfield in the user information field may be specifically shown in Table 5 below.

**Table 5 Subfield in the user information field**

| Third indication information | Number of users | User information field 0 | User information field 1 | User information field 2 | User information field 3 |
|---|---|---|---|---|---|
| The at least one index, of the resource unit associated with the first device, that is greater than 14 does not exist. | 4 | TEI0=FC2[17:6] | TEI1=FC2[41:30] | TEI2=FC2[65:54] | TEI3=FC2[89:78] |
| | | TMI0=FC2[21:18 ] | TMI1=FC2[45:42 ] | TMI2=FC2[69:66 ] | TMI3=FC2[93:90 ] |
| | | TPC0=FC2[24:22 ] | TPC1=FC2[48:46 ] | TPC2=FC2[72:70 ] | TPC3=FC2[96:94 ] |
| | | RUI0=FC2[28:25] | RUI1=FC2[52:49] | RUI2=FC2[76:73] | RUI3=FC2[100:9 7] |
| | | NCopy0=FC2[29] | NCopy1=FC2[53] | NCopy2=FC2[77] | NCopy3=FC2[10 1] |
| | 3 | TEI0=FC2[17:6] | TEI1=FC2[42:31] | TEI2=FC2[67:56] | Reserved |
| | | TMI0=FC2[21:18 ] | TMI1=FC2[46:43 ] | TMI2=FC2[71:68 ] | |
| | | TPC0=FC2[24:22 ] | TPC1=FC2[49:47 ] | TPC2=FC2[74:72 ] | |
| | | RUI0=FC2[28:25] | RUI1=FC2[53:50] | RUI2=FC2[78:75] | |
| | | NCopy0=FC2[30: 29] | NCopy1=FC2[55: 54] | NCopy2=FC2[80: 79] | |
| | 2 | TEI0=FC2[17:6] | TEI1=FC2[42:31] | Reserved | Reserved |
| | | TMI0=FC2[21:18 ] | TMI1=FC2[46:43 ] | | |
| | | TPC0=FC2[24:22 ] | TPC1=FC2[49:47 ] | | |
| | | RUI0=FC2[28:25] | RUI1=FC2[53:50] | | |
| | | NCopy0=FC2[30: 29] | NCopy1=FC2[55: 54] | | |
| The at least one index, of the resource unit associated with the at least one first device, that is greater than 14 exists. | 4 | TEI0=FC2[15:4] | TEI1=FC2[40:29] | TEI2=FC2[65:54] | TEI3=FC2[90:79] |
| | | TMI0=FC2[19:16 ] | TMI1=FC2[44:41 ] | TMI2=FC2[69:66 ] | TMI3=FC2[94:91 ] |
| | | TPC0=FC2[22:20 ] | TPC1=FC2[47:45 ] | TPC2=FC2[72:70 ] | TPC3=FC2[97:95 ] |
| | | RUI0=FC2[27:23] | RUI1=FC2[52:48] | RUI2=FC2[77:73] | RUI3=FC2[102:9 8] |
| | | NCopy0=FC2[28] | NCopy1=FC2[53] | NCopy2=FC2[78] | NCopy3=FC2[10 3] |
| | 3 | TEI0=FC2[17:6] | TEI1=FC2[43:32] | TEI2=FC2[68:57] | Reserved |
| | | TMI0=FC2[21:18 ] | TMI1=FC2[47:44 ] | TMI2=FC2[72:69 ] | |
| | | TPC0=FC2[24:22 ] | TPC1=FC2[50:48 ] | TPC2=FC2[75:73 ] | |
| | | RUI0=FC2[29:25] | RUI1=FC2[55:51] | RUI2=FC2[80:76] | |
| | | NCopy0=FC2[31: 30] | NCopy1=FC2[57: 56] | NCopy2=FC2[82: 81] | |
| | 2 | TEI0=FC2[17:6] | TEI1=FC2[43:32] | Reserved | Reserved |
| | | TMI0=FC2[21:18 ] | TMI1=FC2[47:44 ] | | |
| | | TPC0=FC2[24:22 ] | TPC1=FC2[50:48 ] | | |
| | | RUI0=FC2[29:25] | RUI1=FC2[55:51] | | |
| | | NCopy0=FC2[31: 30] | NCopy1=FC2[57: 56] | | |

In Table 5, TEI is the identification information field, TMI is the first field, TPC is the power control field, RUI is the resource unit field, NCopy is the copy field, and FC2 is the second FC field (where FC2[b:a] (a<b) indicates that the field occupies bits a to b in the second FC field).

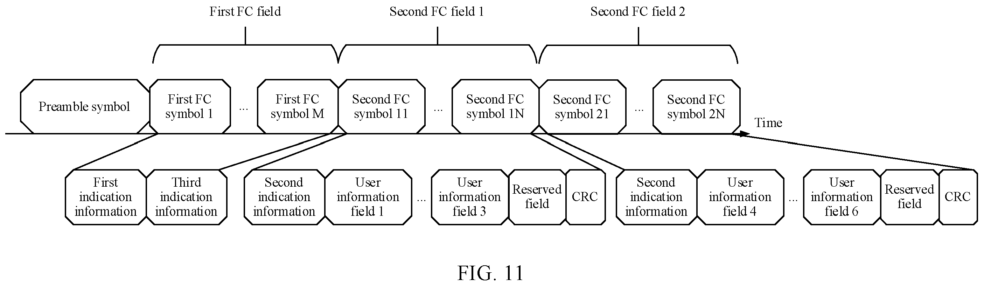

It may be understood that when the number of users is greater than 4, the number of second FC fields is greater than 1. As shown in FIG. 11, the first information may include a preamble symbol, a first FC field (where the first FC field may include M first FC symbols, and information transmitted on the M first FC symbols is the same, that is, the information may be copied to different carriers of the first FC symbols in a diversity manner), a second FC field 1 (where the second FC field 1 may include N second FC symbols 1, and information transmitted on the N second FC symbols 1 is the same, that is, the information may be copied to different carriers of the second FC symbols 1 in a diversity manner), a second FC field 2 (where the second FC field 2 may include N second FC symbols 2, and information transmitted on the N second FC symbols 2 is the same, that is, the information may be copied to different carriers of the second FC symbols 2 in a diversity manner), a training sequence field (for example, the training sequence field includes Z training sequences), and one or more payload data fields (for example, K payload data fields, where payload data in the K payload data fields may be the same or may be different).

The second FC field 1 is the same as the second FC field in FIG. 10.

A second FC field 2 may be newly added after the second FC field 1, second indication information in the second FC field 2 is consistent with second indication information in the second FC field 1 (that is, numbers of training sequences indicated by the second indication information are the same), and a user information field in the second FC field 2 is a user information field (for example, the user information field 4) associated with the first device 4, a user information field (for example, the user information field 5) associated with the first device 5, and a user information field (for example, the user information field 6) associated with the first device 6.

Content of the user information field 4, the user information field 5, and the user information field 6 is similar to content of the user information field in Table 3. Details are not described herein.

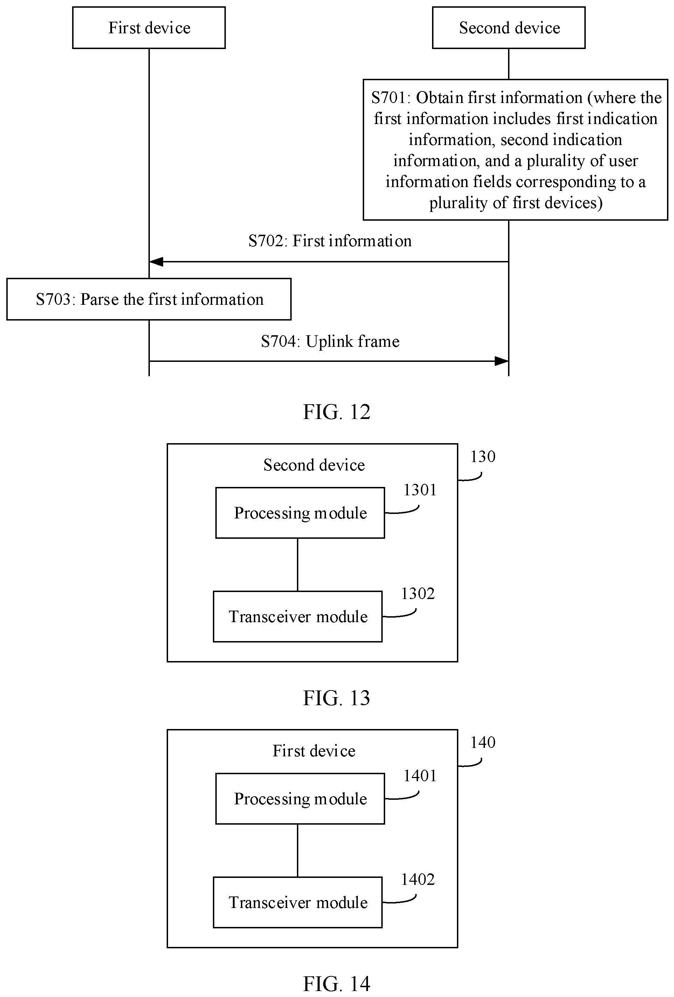

Based on the communication method shown in FIG. 7 to FIG. 11, when the first information is a trigger frame, the first device may send an uplink frame to the second device based on the trigger frame. A specific step may be shown in FIG. 12 below.

S704: The first device sends the uplink frame to the second device. Correspondingly, the second device receives the uplink frame from the first device.

The first device may send the uplink frame to the second device based on the first information.

Optionally, the uplink frame may include a first training sequence.

The first training sequence is determined based on the second indication information.

For example, the second indication information indicates that the number of symbols of the training sequence is 4. The first training sequence may include four training sequences.

Determining the second training sequence associated with the first device is similar to determining the first training sequence associated with the first device. Details are not described herein.

It may be understood that the second device may perform channel estimation on an uplink channel based on the first training sequence, to determine a channel feature of the uplink channel, and parse the payload data in the uplink frame based on the channel feature, so that communication reliability can be improved.

Based on the communication method shown in FIG. 12, the plurality of first devices may simultaneously send uplink frames to the second device on different resource units based on the first information, so that the proportion of the payload data can increase, the throughput of the communication system can be improved, and the communication performance can be improved.

Based on the communication method shown in FIG. 7 to FIG. 12, when the number of users is 1, the first device may parse the first FC field, and communicate with the second device based on the first FC field; or when the number of users is greater than 1, the first device may further parse the second FC field, and communicate with the second device based on the second FC field.

It should be noted that various embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined to form a new embodiment based on an internal logical relationship thereof.

It may be understood that an execution body may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

The foregoing mainly describes the solutions provided in this application from a perspective of interaction between devices. Correspondingly, this application further provides a communication apparatus, and the communication apparatus is configured to implement the foregoing methods. The communication apparatus may be the first device in the foregoing method embodiments, or an apparatus including the first device, or may be a component that can be used in the first device; or the communication apparatus may be the second device in the foregoing method embodiments, or an apparatus including the second device, or may be a component that can be used in the second device.

It may be understood that, to implement the foregoing functions, the communication apparatus includes a hardware structure and/or a software module for performing each corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into modules is an example, and is merely logical function division. During actual implementation, another division manner may be used.

In an implementation scenario, the communication apparatus being the second device in the foregoing method embodiments is used as an example. FIG. 13 is a diagram of a structure of a second device 130. The second device 130 includes a processing module 1301 and a transceiver module 1302.

In some embodiments, the second device 130 may further include a storage module (not shown in FIG. 13), configured to store program instructions and data.

In some embodiments, the transceiver module 1302 may also be referred to as a transceiver unit, and is configured to implement a sending function and/or a receiving function. The transceiver module 1302 may include a transceiver circuit, a transceiver machine, a transceiver, or a communication interface.

In some embodiments, the transceiver module 1302 may include a receiving module and a sending module, respectively configured to perform receiving and sending steps performed by the second device in the foregoing method embodiments, and/or another process used to support the technology described in this specification. The processing module 1301 may be configured to perform processing (for example, determining and generation) steps performed by the second device in the foregoing method embodiments, and/or another process used to support the technology described in this specification.

For example, the processing module 1301 is configured to obtain first information, where the first information includes first indication information, second indication information, and one or more user information fields corresponding to one or more first devices, the first indication information indicates a number of users, and the second indication information indicates a number of symbols of a training sequence; and the transceiver module 1302 is configured to send the first information.

In this application, the second device 130 is presented in a form of obtaining each functional module through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the second device 130 may use a form of the communication apparatus 60 shown in FIG. 6.

In an example, a function/implementation process of the processing module 1301 in FIG. 13 may be implemented by the processor 601 in the communication apparatus 60 shown in FIG. 6 by invoking the computer-executable instructions stored in the memory 603. A function/implementation process of the transceiver module 1302 in FIG. 13 may be implemented by the communication interface 604 in the communication apparatus 60 shown in FIG. 6.

In some embodiments, when the second device 130 in FIG. 13 is a chip or a chip system, the function/implementation process of the transceiver module 1302 may be implemented by an input/output interface (or a communication interface) of the chip or the chip system, and the function/implementation process of the processing module 1301 may be implemented by a processor (or a processing circuit) of the chip or the chip system.

The second device 130 provided in this embodiment may perform the method. Therefore, for technical effect that can be achieved by the second device 130, refer to the foregoing method embodiments. Details are not described herein again.

In another implementation scenario, the communication apparatus being the first device in the foregoing method embodiments is used as an example. FIG. 14 is a diagram of a structure of the first device 140. The first device 140 includes a processing module 1401 and a transceiver module 1402.

In some embodiments, the first device 140 may further include a storage module (not shown in FIG. 14), configured to store program instructions and data.

In some embodiments, the transceiver module 1402 may also be referred to as a transceiver unit, and is configured to implement a sending function and/or a receiving function. The transceiver module 1402 may include a transceiver circuit, a transceiver machine, a transceiver, or a communication interface.

In some embodiments, the transceiver module 1402 may include a receiving module and a sending module, respectively configured to perform receiving and sending steps performed by the first device in the foregoing method embodiments, and/or another process used to support the technology described in this specification. The processing module 1401 may be configured to perform processing (for example, determining and generation) steps performed by the first device in the foregoing method embodiments, and/or another process used to support the technology described in this specification.

For example, the processing module 1401 is configured to obtain first information, where the first information includes first indication information, second indication information, and a plurality of user information fields corresponding to a plurality of first devices, the first indication information indicates a number of users, and the second indication information indicates a number of symbols of a training sequence; and the processing module 1401 is further configured to parse the first information.

In a possible implementation, the transceiver module 1402 is configured to send an uplink frame to the second device based on the first information.

In a possible implementation, the uplink frame includes a first training sequence, and the first training sequence is determined based on the second indication information and an index of a resource unit associated with the first device.

In this application, the first device 140 is presented in a form of obtaining each functional module through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the first device 140 may use a form of the communication apparatus 60 shown in FIG. 6.

In an example, a function/implementation process of the processing module 1401 in FIG. 14 may be implemented by the processor 601 in the communication apparatus 60 shown in FIG. 6 by invoking the computer-executable instructions stored in the memory 603. A function/implementation process of the transceiver module 1402 in FIG. 14 may be implemented by the communication interface 604 in the communication apparatus 60 shown in FIG. 6.

In some embodiments, when the first device 140 in FIG. 14 is a chip or a chip system, the function/implementation process of the transceiver module 1402 may be implemented by an input/output interface (or a communication interface) of the chip or the chip system, and the function/implementation process of the processing module 1401 may be implemented by a processor (or a processing circuit) of the chip or the chip system.

The first device 140 provided in this embodiment may perform the method. Therefore, for technical effect that can be achieved by the first device 140, refer to the foregoing method embodiments. Details are not described herein again.

In a possible product form, the first device or the second device in embodiments of this application may be further implemented by using the following: one or more field programmable gate arrays (field programmable gate arrays, FPGA), a programmable logic device (programmable logic device, PLD), a controller, a state machine, gate logic, a discrete hardware component, any other appropriate circuit, or any combination of circuits that can perform various functions described throughout this application.

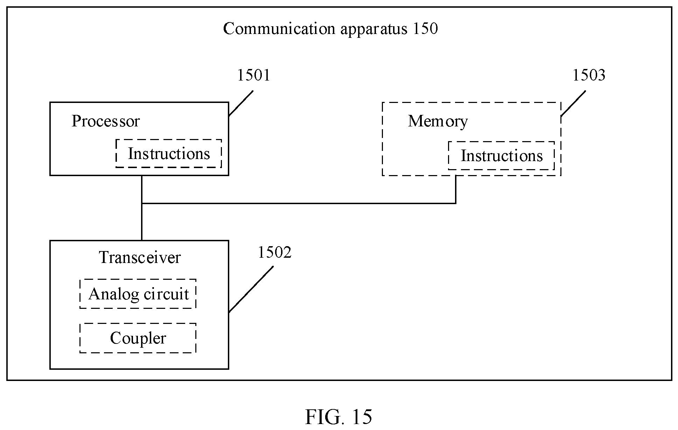

In a possible product form, the first device or the second device in embodiments of this application may be implemented by using a general bus architecture. For ease of description, FIG. 15 is a diagram of a structure of a communication apparatus 150 according to an embodiment of this application. The communication apparatus 150 includes a processor 1501 and a transceiver 1502. The communication apparatus 150 may be a first device, or a chip or module in the first device; or the communication apparatus 150 may be a second device, or a chip or module in the second device. FIG. 15 shows only main components of the communication apparatus 150. In addition to the processor 1501 and the transceiver 1502, the communication apparatus may further include a memory 1503.

Optionally, the processor 1501 is mainly configured to: process a communication protocol and communication data, control the entire communication apparatus, execute a software program, and process data of the software program. The memory 1503 is mainly configured to store the software program and data. The transceiver 1502 may include an analog circuit and a coupler. The analog circuit is mainly configured to: perform conversion between a baseband signal and a power line signal, and process the power line signal. The coupler is mainly configured to receive and send a power line signal in a form of an electromagnetic wave.

Optionally, the processor 1501, the transceiver 1502, and the memory 1503 may be connected through a communication bus.

After the communication apparatus is powered on, the processor 1501 may read the software program in the memory 1503, interpret and execute instructions of the software program, and process data of the software program. When data needs to be sent in a wireless manner, the processor 1501 performs baseband processing on the to-be-sent data, and outputs a baseband signal to the analog circuit. The analog circuit sends the baseband signal through the coupler and transmits the baseband signal in a power line. When data is sent to the communication apparatus, the analog circuit receives the power line signal through the coupler, converts the power line signal into a baseband signal, and outputs the baseband signal to the processor 1501. The processor 1501 converts the baseband signal into data and processes the data.

In another implementation, the analog circuit and the coupler may be disposed independent of the processor that performs baseband processing. For example, in a distributed scenario, the analog circuit and the coupler may be disposed remotely and independent of the communication apparatus.

In some embodiments, an embodiment of this application further provides a communication apparatus. The communication apparatus includes a processor, configured to implement the method in any one of the foregoing method embodiments. The communication apparatus may be the first device or the second device in the foregoing method embodiments.

In a possible implementation, the communication apparatus further includes a memory. The memory is configured to store a necessary computer program and necessary data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read through another component) and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions; and when the computer program or the instructions are executed by a computer, functions in any one of foregoing method embodiments are implemented.

This application further provides a computer program product. When the computer program product is executed by a computer, functions in any one of foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and method described in this application may alternatively be implemented in another manner. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, this is, may be located in one place, or may be distributed on a plurality of network units. Parts displayed as units may or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of a plurality of. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the spirit and scope of this application. Correspondingly, this specification and the accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, applied to a power line communication scenario, and comprising:
obtaining first information, wherein the first information comprises first indication information, second indication information, and a plurality of user information fields corresponding to a plurality of first devices, the first indication information indicates a number of users, and the second indication information indicates a number of symbols of a training sequence; and
sending the first information.

2. A communication method, applied to a power line communication scenario, and comprising:
obtaining first information, wherein the first information comprises first indication information, second indication information, and a plurality of user information fields corresponding to a plurality of first devices, the first indication information indicates a number of users, and the second indication information indicates a number of symbols of a training sequence; and
parsing the first information.

3. The method according to claim 2, wherein the method further comprises:
sending an uplink frame to a second device based on the first information.

4. The method according to claim 3, wherein
the uplink frame comprises a first training sequence, and the first training sequence is determined based on the second indication information and an index of a resource unit associated with the first device.

5. The method according to any one of claims 1 to 4, wherein
the first information further comprises third indication information, the third indication information indicates whether at least one index, of the resource unit associated with the first device, that is greater than a first value exists, and the first value is a positive integer.

6. The method according to any one of claims 1 to 5, wherein
when the number of users is equal to 4, the first information further comprises a physical block field; or
when the number of users is less than 4, each of the plurality of user information fields comprises a physical block field, wherein
the physical block field indicates a number of physical blocks occupied by each first device.

7. The method according to claim 6, wherein
a number of bits occupied by the physical block field is determined based on the first indication information; or
a number of bits occupied by the physical block field is determined based on the first indication information and third indication information, the third indication information indicates whether the at least one index, of the resource unit associated with the first device, that is greater than the first value exists, and the first value is the positive integer.

8. The method according to claim 7, wherein
when the number of users indicated by the first indication information is less than 4, the number of bits occupied by the physical block field is 4; or
when the number of users indicated by the first indication information is equal to 4, and the third indication information indicates that the at least one index, of the resource unit associated with the first device, that is greater than the first value does not exist, the number of bits occupied by the physical block field is 4; or
when the number of users indicated by the first indication information is equal to 4, and the third indication information indicates that the at least one index, of the resource unit associated with the first device, that is greater than the first value exists, the number of bits occupied by the physical block field is 2.

9. The method according to any one of claims 1 to 8, wherein
each of the plurality of user information fields further comprises a power control field, and the power control field indicates a transmit power of the first device.

10. The method according to any one of claims 1 to 9, wherein
each of the plurality of user information fields further comprises a resource unit field, and the resource unit field indicates the index of the resource unit associated with the first device.

11. The method according to claim 10, wherein
a number of bits occupied by the resource unit field is determined based on the third indication information, the third indication information indicates whether the at least one index, of the resource unit associated with the first device, that is greater than the first value exists, and the first value is the positive integer.

12. The method according to claim 11, wherein
when the third indication information indicates that the at least one index, of the resource unit associated with the first device, that is greater than the first value does not exist, the number of bits occupied by the resource unit field is 4; or
when the third indication information indicates that the at least one index, of the resource unit associated with the first device, that is greater than the first value exists, the number of bits occupied by the resource unit field is 5.

13. The method according to any one of claims 1 to 12, wherein
each of the plurality of user information fields further comprises a copy field, the copy field indicates a number of copy times, and the number of copy times indicates a number of repetitions of payload data.

14. The method according to claim 13, wherein
a number of bits occupied by the copy field is determined based on the first indication information.

15. The method according to claim 14, wherein
when the number of users indicated by the first indication information is less than 4, the number of bits occupied by the copy field is 2; or
when the number of users indicated by the first indication information is equal to 4, the number of bits occupied by the copy field is 1.

16. The method according to any one of claims 1 to 15, wherein
the first information is a trigger frame.

17. The method according to claim 1 or 2, wherein
each of the plurality of user information fields comprises a physical block field, and the physical block field indicates a number of physical blocks occupied by the first device.

18. The method according to claim 17, wherein
a number of bits occupied by the physical block field is determined based on the first indication information.

19. The method according to claim 18, wherein
when the number of users indicated by the first indication information is less than 4, the number of bits occupied by the physical block field is 4; or
when the number of users indicated by the first indication information is equal to 4, the number of bits occupied by the physical block field is 1.

20. The method according to any one of claims 1 and 2 and 17 to 19, wherein
each of the plurality of user information fields further comprises one or both of the following: a copy field or a resource unit field; and
the copy field indicates a number of copy times, the number of copy times indicates a number of repetitions of payload data, and the resource unit field indicates an index of a resource unit associated with the first device.

21. The method according to any one of claims 1 and 2 and 17 to 20, wherein
the first information further comprises a second training sequence, and the second training sequence is determined based on the second indication information.

22. The method according to any one of claims 1 and 2 and 17 to 21, wherein
the first information is a downlink frame.

23. The method according to any one of claims 1 to 22, wherein
the user information field of the first device further comprises one or both of the following: an identification information field or a first field; and
the identification information field indicates identification information of the first device, and the first field indicates one or more of the following: a modulation and coding scheme, a code rate, or a size of a physical block.

24. A communication apparatus, comprising:
a processing module, configured to obtain first information, wherein the first information comprises first indication information, second indication information, and a plurality of user information fields corresponding to a plurality of first devices, the first indication information indicates a number of users, and the second indication information indicates a number of symbols of a training sequence; and
a transceiver module, configured to send the first information.

25. A communication apparatus, comprising:
a processing module, configured to obtain first information, wherein the first information comprises first indication information, second indication information, and a plurality of user information fields corresponding to a plurality of first devices, the first indication information indicates a number of users, and the second indication information indicates a number of symbols of a training sequence, wherein
the processing module is further configured to parse the first information.

26. A communication apparatus, wherein the communication apparatus comprises a processor, and the processor is configured to enable, by running a computer program or instructions or by using a logic circuit, the communication apparatus to perform the communication method according to any one of claims 1 and 3 to 23, or the communication apparatus to perform the communication method according to any one of claims 2 to 23.

27. A computer-readable storage medium, wherein the computer-readable storage medium stores computer instructions or a program; and when the computer instructions or the program is run on a computer, the communication method according to any one of claims 1 and 3 to 23 is performed, or the communication apparatus is enabled to perform the communication method according to any one of claims 2 to 23.

28. A communication system, wherein the communication system comprises a first device and a second device, the second device is configured to perform the communication method according to any one of claims 1 and 3 to 23, and the first device is configured to perform the communication method according to any one of claims 2 to 23.
